# EUROPEAN PATENT APPLICATION

(11) **EP 3 825 621 A1**
(43) Date of publication of application: **26.05.2021**
(21) Application number: 19211080.7
(22) Date of filing: 25.11.2019
(51) Int. Cl.: F24F 13/06, F16K 3/03, F24C 15/00, F24F 13/10, F24F 13/14, F24F 110/40, F24F 140/40

(54) **SENSITIVE DIFFUSER FOR CENTRAL VENTILATION SYSTEMS**

(71) Applicant: Silverline Endüstri ve Ticaret A.S., 05300 Amasya (TR)
(72) Inventor: Ceviksever, Tolga Güven, 05300 Amasya (TR)
(74) Representative: Mutlu, Aydin

(57) **Abstract**

The present invention relates to a diffuser (100) for ventilation of a multi-unit residential building through a central ventilation system, comprising a stationary disc (1) having a plurality of apertures (11), a damper (2) rotating with a radial movement over said stationary disc (1) and having a plurality of wings (21) corresponding to said apertures (11) in order to open and close them, whereby the diffuser (100) further comprises a servo motor (3) providing radial movement of the damper (2) and a differentiating pressure sensor (7) communicating with the servo motor (3) and producing a signal based on a difference of the pressure values obtained through the first inlet (71) and second inlet (72) thereof for arranging size of the aperture (11) and obtaining the desired level of airflow.

## Description

### Technical Field

The present invention relates to a diffuser for use in air ventilation systems. More particularly, the present invention pertains to an improved sensitive diffuser, designed specifically for use in range hoods or in the rooms of the apartments having a common ventilation system, which adjusts level of the airflow automatically depending on the pressure in the exhaust or discharge line. The present invention further relates to a novel range hood and a central ventilation system comprising the diffuser as mentioned hereinabove.

### Background of the Invention

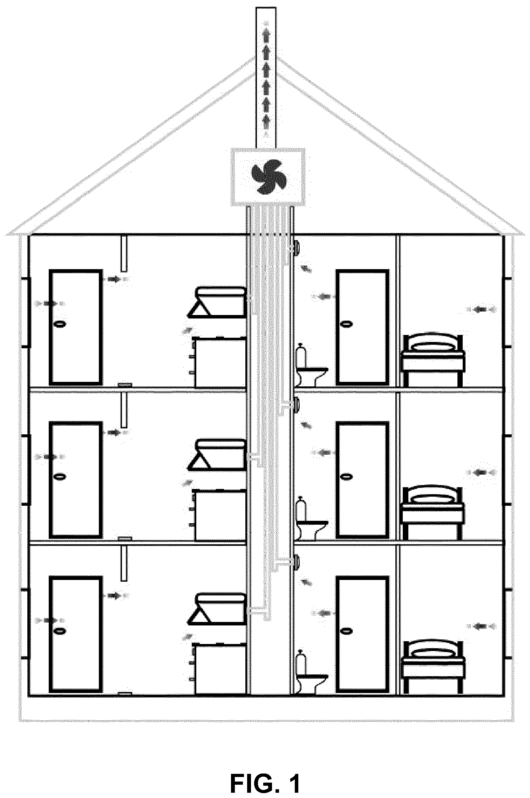

Common/central ventilation systems are increasingly used in multi-unit residential buildings for intake and exhaust of air in kitchens, rooms, bathrooms or any other area of the apartments. Central exhaust systems or discharge lines are already used in Europe particularly in Nordic countries for discharging dirty air from the building as shown in Fig. 1. These systems typically involve a high-power engine connected to a common exhaust line for sucking the internal dirty air of the apartments and discharging the same to the outside. The common exhaust line may be connected to the kitchen appliances such as range hoods for extracting smoke on a cooktop. In these kinds of range hoods, there is no need to employ a separate blow fan as in the classical range hoods because the vacuum necessary for extracting air is already supplied by the common exhaust system of the building.

However, diffusers are required in the foregoing systems in order to adjust the air flow through the common discharge line. These diffusers are typically integrated to the range hoods in the kitchens, or on the walls and ceilings of other rooms whereby each diffuser requires its own setting depending on the pressure in the area of connection to the exhaust line. Therefore, a predetermined setting is applied during set up and initial construction of the system is done by skilled technicians by way of measuring pressure in the area of connection to the common exhaust duct and adjusting the air flow allowance of the diffuser. The high-power central blower is generally located on top of the building, and therefore the pressure drops down in lower floors whereby opening of the diffuser is set larger in order to compensate this pressure drop. Diffusers are generally set in order to operate in two modes: (1) "ground ventilation"; which provide ventilation generally at a flow rate of around 72 m³/h when there is no cause of smoke or dirty air in the room, and (2) "forced ventilation" which causes the diffuser to open up in order to provide a ventilation generally at a flow rate of around 144 m³/h especially when cooking is applied in a kitchen. Some diffusers are also equipped with means to close the air flow entirely.

One common problem encountered with conventional diffusers of the exhaust systems mentioned above is that they have poor consistency and adjustability in different operation modes such that opening of the diffuser does not always return to the pre-set value and loses its consistency after several movements. As mentioned above, technicians initially adjust their opening upon installation based on measurements and it is normally not possible for the users to interfere with these settings later on. Opening of the diffuser after installation is adjusted between ground ventilation and forced ventilation as well as the closed state, manually or automatically. As the sensitivity is lost by time, these operations modes may shift to an undesired level of air flow. Installation and re-adjustment are cumbersome, expensive and require skilled technicians in each case.

A further problem of the diffusers is observed specifically in the central ventilation systems. Performance of the high-power central blower of the central ventilation system frequently changes due to several factors such as the number of diffusers and range hoods instantaneously working in the system and ambient whether conditions causing fluctuations in the pressure of the common exhaust line. Since the adjustment of airflow through the diffuser is made in a constant manner upon installation at the beginning, the diffuser cannot compensate pressure changes in the exhaust line and cannot dynamically reset a new value of airflow automatically. Besides, pressure measurement in the common exhaust line is necessary in each installation of the diffuser which requires skilled personnel, longer installation periods, and more service costs. The technicians are therefore under the burden of measuring pressure in each location during installation in order to rearrange optimum airflow depending on the local pressure in the central ventilation system.

Another problem of the conventional diffusers is the noise created by the airflow which can be disturbing in a closed area such as a kitchen or bedroom. Structural design of the conventional diffusers is generally made without due consideration of the noise in different operation modes.

Still a further problem of the existing diffusers is that they have complicated structure which make their manufacturing procedure expensive and inefficient. Therefore, diffusers in central ventilation systems need to be simplified while eliminating foregoing shortcomings.

A flow control device designed by the applicant for overcoming some of these shortcomings mentioned above was disclosed in EP 3431883 A1 with a structure comprising a stationary disc having plurality of apertures, a rotatable disc having apertures corresponding to those of the stationary disc, and an actuation motor which rotates said rotatable disc. This design is later on abandoned because of the complicated procedure of production and due to the problems outlined hereinabove. Similar devices are also provided in US 2235731-A and FR 1345195-A, comprising disk elements having coaxial circular grooves. The inventors however noted that noise of the diffuser increases with increased number of grooves as disclosed in above documents.

WO 99/47839 A1 discloses a flow control device for ducts which is operated based on the iris-diaphragm principle with control leaves. This arrangement, however, is more convenient for ventilating a room rather than range hoods, because the system is complicated and not suitable for discharging smoked air over a cooktop due to the accumulation of fatty dirtiness on the control leaves. The single orifice provided centrically increases noise of airflow. Additionally, the potentiometer used to provide a real time indication of the actual control position of the damper increases complexity of the overall design. Hence, the flow control device provided in this document has limited usability in a central ventilation system of a building.

Therefore, there has been an unmet need in prior art to provide diffusers suitable for common exhaust systems as well as range hoods connected to these systems, which would minimize complexity, manufacturing costs, noise of the operation and installation costs. There is also need for diffusers which would operate inbetween different modes precisely with high sensitivity for the airflow without deviating from pre-set working conditions. These objectives are currently achieved with a diffuser according to claim 1.

### Brief Description of the Invention

The present invention relates to a novel diffuser (100) for achieving the foregoing objectives comprising a stationary disc (1) having a plurality of apertures (11), a damper (2) rotating with a radial movement over said stationary disc (1) and having a plurality of wings (21) corresponding to said apertures (11) in order to open and close them, and a fixation disc (5) mounted over the said stationary disc (1). The diffuser (100) advantageously comprises a servo motor (3) connected to said damper (2), which provides radial movement of the damper (2) between predetermined positions over the stationary disc (1), and a differentiating pressure sensor (7) which measures the pressure difference basically between a first inlet (71) and second inlet (72) thereof. The differentiating pressure sensor (7) is connected to the servo motor (3) and is adapted to generate a control signal based on the said pressure difference in order to activate the servo motor (3) and move the damper (2) to a predetermined position.

In a preferred embodiment, the fixation disc (5) comprises indication means (51) coinciding with at least one predetermined indication point on the damper (2) in order to show predetermined positions of the damper (2) corresponding to predetermined levels of airflow. Thereby, the servo motor (3) is adapted to move the damper (2) between said predetermined positions based on pre-set position data.

With the above arrangement, the initial installation is made in a more accurate and easy way by a technician, and subsequent operation of the damper (2) for adjusting airflow is achieved consistently without deviation from predetermined positions.

In preferred embodiments, the fixation disc (5) comprises a plurality of indication means (51) located at different positions along circumferential area thereof which positions are determined based on the pressure data measured in a common discharge line of the central ventilation system. These positions may be arranged for ground ventilation and forced ventilation based on the pressure value in a common discharge line of the central ventilation system. Said indication means (51) is preferably provided in the form of written indications, grooves or a combination thereof.

The damper (2) mentioned above preferably comprises two opposing wings (21) on two sides of a center hole (20) and said stationary disc (1) is therefore provided with apertures (11) corresponding to the wings (21) on two sides of its center hole (10).

In further aspects, the present invention provides a device for making an initial setting and installation of the diffuser (100) explained above, as well as a novel method for installing said diffuser (100).

Still in further aspects, the present invention provides a central ventilation system for removing dirty air from a multi-unit residential building comprising the diffuser (100) defined hereinabove as well as novel use of said diffuser (100) in a central ventilation system of a multi-unit residential building or a range hood connected to said system.

### Brief Description of the Figures

The preferred embodiments of the present invention are illustrated via non-limiting drawings wherein;
Figure 1 is an exemplary view of the buildings with central ventilation means in prior art.
Figure 2 is an exploded view of the diffuser (100) according to the present invention.
Figure 3 is a planar view of the damper (2) belonging to the diffuser (100) according to the present invention.
Figure 4 shows a planar view of the stationary disc (1) belonging to the diffuser (100) according to the present invention.
Figure 5 shows a planar view of the fixation disc (5) belonging to the diffuser (100) according to the present invention.
Figure 6 is a side view of the diffuser (100) according to the present invention.
Figure 7 is a perspective view of a differentiating pressure sensor (7) used in the diffuser (100) according to the instant invention.
Figure 8 is a planar view of the diffuser (100) connected with the differentiating pressure sensor (7).
Figure 9 is an exemplary calibration chart which can be used for setting of angular position of the servo motor (3) and the damper (2) in order to provide a predetermined level of airflow.
Figure 10 shows the diffuser (100) according to the present invention in a fully opened state.
Figure 11 shows the diffuser (100) according to the present invention in a fully closed state.
Figure 12 shows the diffuser (100) according to the present invention in a partially closed state for providing an intermediate level of airflow.

### Detailed Description of the Invention

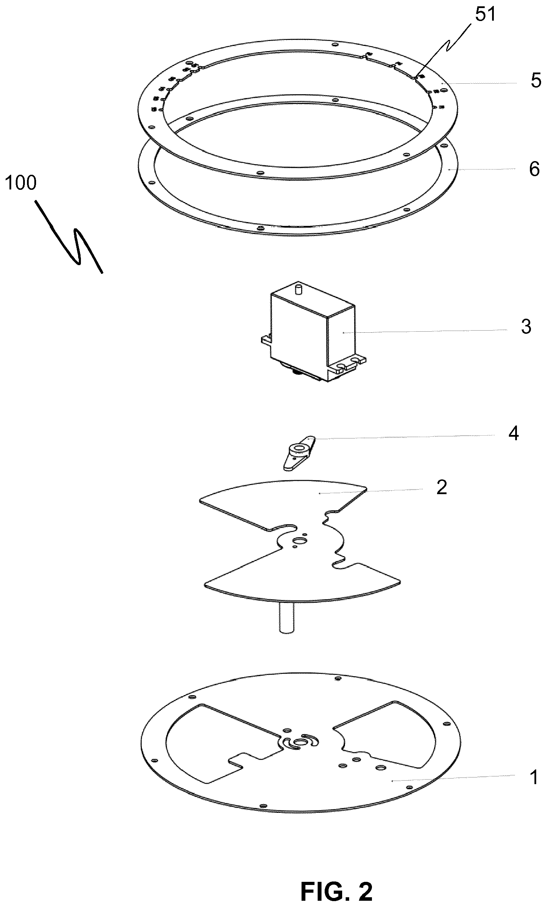

The present invention provides an improved diffuser (100) for use in central ventilation systems of multi-unit residential buildings, an exploded view of which is shown in Fig. 2. The diffuser (100) according to the instant invention comprises a stationary disc (1), a damper (2), and a servo motor (3) which rotates said damper (2) over the stationary disc (1). Preferably, an actuation lever (4) is provided for this purpose in a manner such that the lever (4) is coupled with the servo motor (3) and the damper (2) in order to rotate said damper (2) radially. A fixation disc (5) is also provided in the diffuser structure. Preferably, a levelling disc (6) is placed between the fixation disc (5) and the stationary disc (1) in order to ensure rotational movement of the damper (2) properly. A further advantage of the levelling disc (6) is preventing airflow inbetween the stationary disc (1) and the fixation disc (5) which certainly contributes to the reduction of noise cased by the airflow.

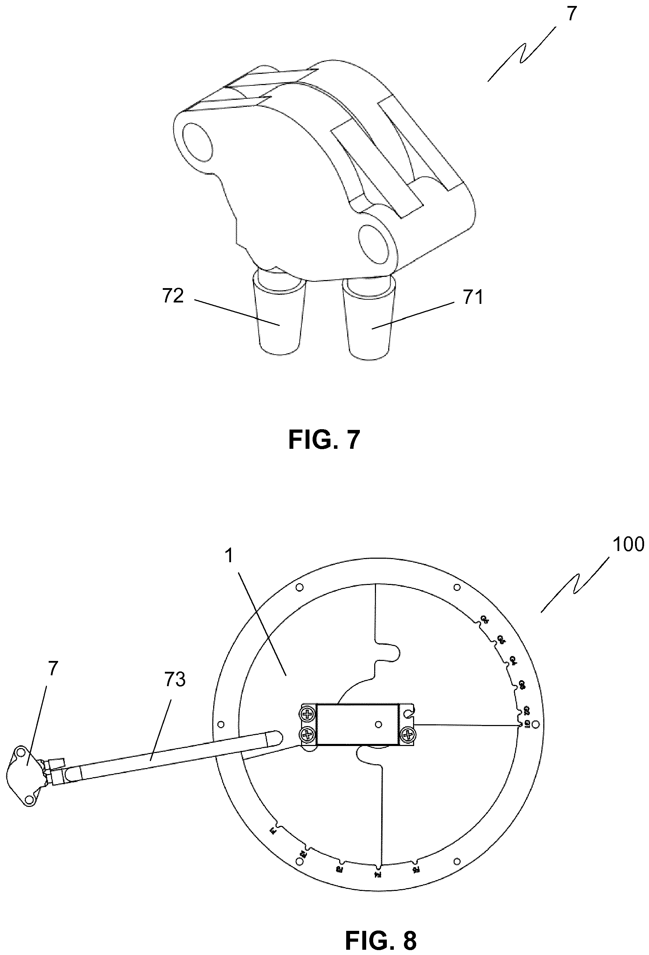

The diffuser (100) according to the present invention further comprises a differentiating pressure sensor (7) as shown in Fig. 7 which is connected to the diffuser (100) via an air duct (73) as shown in Fig. 8. The air duct (73) may be connected to the stationary disc (1) on the one end and to the first inlet (71) of the pressure sensor (7) on the other end for detecting the pressure in the exhaust line of a common ventilation system. The second inlet (72) is exposed to the media to be ventilated such as a kitchen or room for detecting the ambient pressure. The differentiating pressure sensor (7) intrinsically measures the pressure difference between the second inlet (72) and first inlet (71), and produces a control signal to the servo motor (3). The servo motor (3) is therefore adapted to move the damper (2) to a predetermined position corresponding to said pressure difference. Eventually, the diffuser (100) of the present invention doesn't necessitate further settings by a skilled technician and tolerates well the pressure fluctuations in the common ventilation system of the building. The servo motor (3) ensures precise and correct performance of the diffuser (100) for every signal of the differentiating pressure sensor (7). These signals can be set to be obtained on regular basis (i.e. periodically) such as every one hour, half an hour, minutes or seconds.

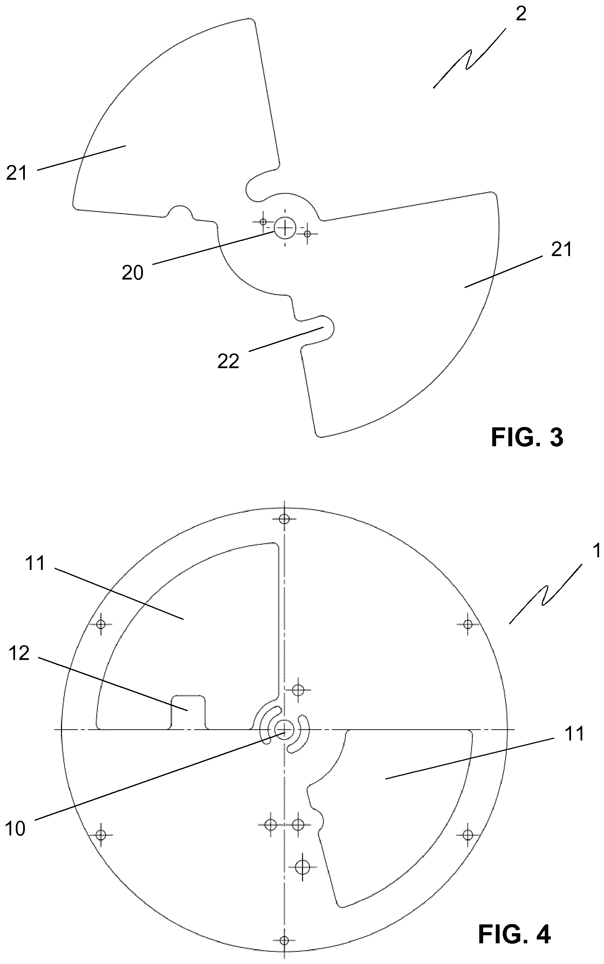

The damper (2) mentioned above has a structure like a butterfly in shape having two opposing wings (21) on two sides of a center hole (20) as shown in Fig. 3. Accordingly, the stationary disc (1) is provided with corresponding apertures (11) on two sides of the center hole (10) thereof as shown in Fig. 4. With this arrangement, the wings (21) of the damper (2) shall be able to close the apertures (11) in whole or in part depending on the predetermined flow rate of air. The inventors noted that the foregoing butterfly structure of the damper (2) provides improvement in terms of noise caused by airflow as compared to the diffusers having several of grooves as disclosed, for instance, in EP 3431883 A1.

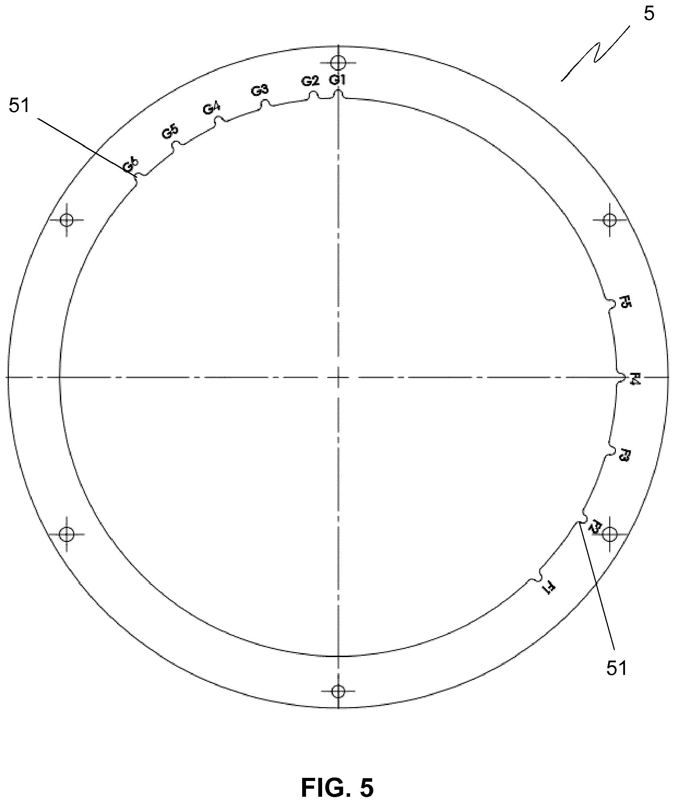

As mentioned above, the diffuser assembly (100) according to the present invention further comprises a fixation disc (5) in the form of a circle. In preferred embodiments, the fixation disc (5) comprises position indication means (51) on its circumferential area as shown in Fig. 5. The position indication means (51) are preferably provided in the form of written indications, grooves or a combination thereof as in Fig. 5 in predetermined positions of the fixation disc (5). The fixation disc (5) also ensures firm fixation of the overall assembly, creates a guidance channel for the radial movement of the damper (2) through its circumferential area mutually with the stationary disc (1), and therefore it is noted to be advantageous for reducing noise during airflow. This advantage is particularly important if the overall assembly of the diffuser (100) is made of metal.

The damper (2) according to the instant invention may further comprise at least one groove (22) on one of the wings (21) in order to provide a further radial movement for the damper (2). As the servo motor (3) is mounted on the stationary disc (1) and connected to the damper (2) with the actuation lever (4), the damper (2) normally abuts in a full opening state to the fixing elements of the servo motor (3) which in turn would be limiting its radial movement, and therefore limiting the opening aperture and airflow. With the groove (22) mentioned above, the damper (2) may further rotate as it abuts to the fixing elements of the servo motor (3) upon the groove (22) in fully opened state. In fully closed state of the damper (2) said groove (22) may constitute an aperture and cause an air leak. Therefore, the stationary disc (1) is provided with a protrusion (12) as shown in Fig. 4 corresponding to said groove (22) for accomplishment of a fully closed state.

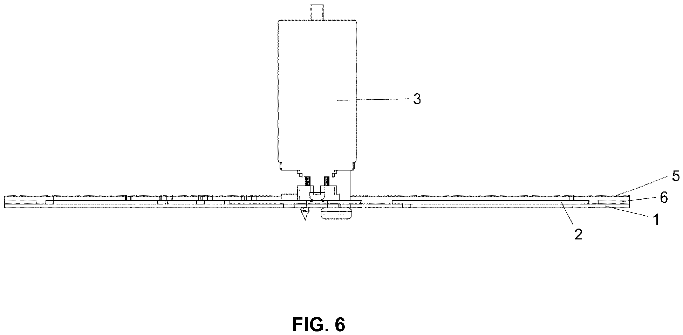

The diffuser (100) of the present invention provides a compact and very thin arrangement once all of the pieces are mounted together as shown in Fig. 6.

The diffuser (100) assembly according to the present invention is also advantageous in that installation settings can be made in an easier way by virtue of the differentiating pressure sensor (7). The technician installing the diffuser (100) shall not have an undue burden to measure the pressure in the common exhaust line of the building. Instead, the diffuser (100) will be able to measure the pressure difference as explained above, and automatically operate the servo motor (3) according to the pre-set values in order to obtain the corresponding aperture (11) enabling the desired airflow. Therefore, service costs and complexity of installation are substantially reduced thanks to the improved diffuser (100) of the present invention. Beside of the foregoing advantages, the differentiating pressure sensor (3) measures the pressure difference rather than the sole measurement of pressure in the common exhaust line. This advantage ensures more sensitive and precise adjustment of the airflow through the diffuser (100).

As mentioned above, the differentiating pressure sensor (7) is adapted to measure the pressure difference between the second inlet (72) and first inlet (71) for producing a signal to be used by the servo motor (3). The second inlet (72) is for detecting the pressure at the location of installation of the diffuser (100) from where the air is sucked and discharged. The first inlet (71), on the other hand, is connected to the stationary disc (1) in order to detect the pressure in the discharge line connected to the common ventilation system.

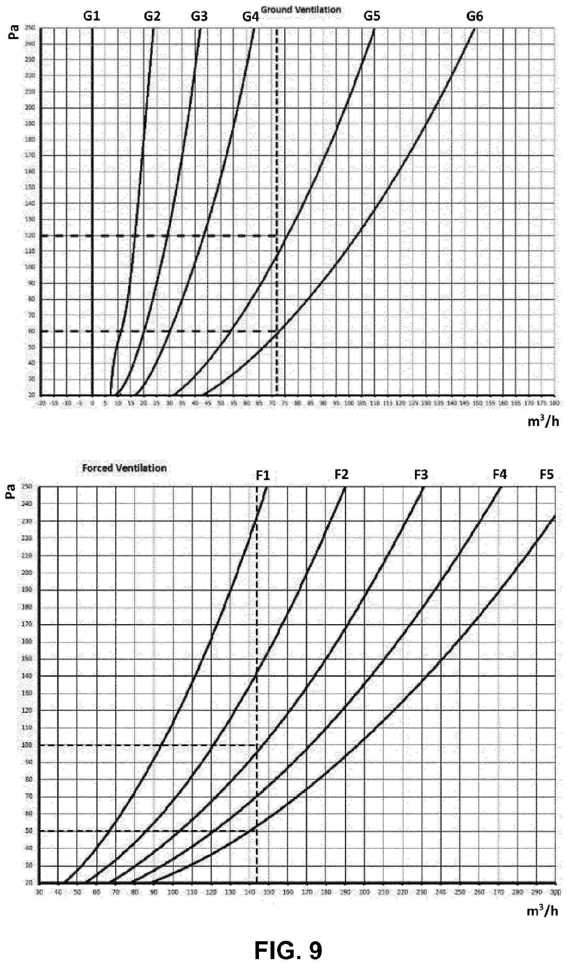

Under particular circumstances, the initial setting can be accomplished manually by a skilled technician still in an advantageous way. In order to provide this option in a reliable and precise way, the fixation disc (5) comprises position indication means (51) as shown in Fig. 5. The level of airflow in Ground ventilation and Forced ventilation modes can be set easily upon installation by a technician by comparing the pressure measured in the discharge line and the desired flow rate of air in ground and forced ventilation modes by way using a calibration chart as shown in Fig. 9.

Accordingly, functioning of the diffuser (100) according to the present invention is not limited to particular modes of operation, and eventually ventilation can be set to several of intermediate levels as shown in Figures 5 and 9. Ground ventilation, for instance, can be set to one or several of the levels of G1, G2, G3, G4, G5, G6 indicated on the fixation disc (5) in consideration with a calibration chart as shown in Fig. 9. Likewise, forced ventilation can be arranged in one or several of the levels such as F1, F2, F3, F4, F5. All these settings are accomplished depending on the needs of the customer and the pressure in the discharge line of the common ventilation system.

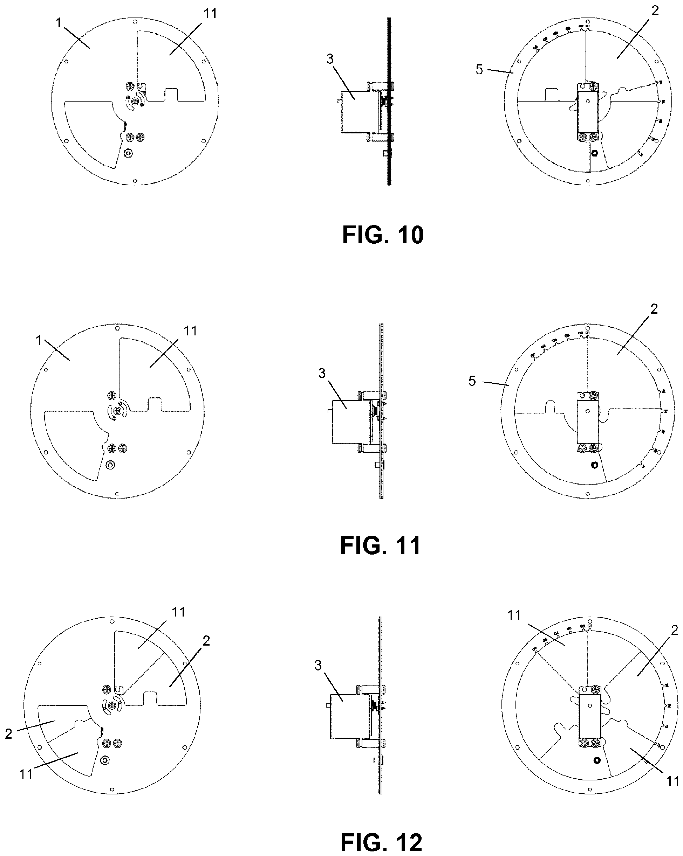

In the case of a forced ventilation in a fully opened state, for instance, a predetermined end or indication point of the damper (2) is brought into the corresponding position (i.e. F5) on the fixation disc (5) as shown in Fig. 10 so that apertures (11) of the stationary disc (1) may be totally opened and maximum airflow can be ensured.

Likewise, in the case of a closed state of the diffuser (100), a predetermined end or indication point of the damper (2) is brought into the corresponding position (i.e. G1) on the fixation disc (5) as shown in Fig. 11 so that apertures (11) of the stationary disc (1) may be totally closed and thereby airflow is substantially blocked.

As mentioned above, the diffuser (100) according to the present invention may also be adapted to operate at intermediate levels of airflow as shown, for instance, in Fig. 12. In this case, a predetermined end or indication point of the damper (2) is brought into the corresponding position (i.e. F2) on the fixation disc (5) so that apertures (11) of the stationary disc (1) may be partially closed and only a predetermined airflow is allowed through said apertures (11). Obviously, other intermediate levels may also be applicable in the diffuser (100) as explained above.

It is known that conventional diffusers are installed with pre-setting of a skilled technician so that the diffuser may be operated inbetween two (ground/forced ventilation) or three (ground/forced ventilation/closed state) functional states. Each time, the damper moves back and forth for closing respective apertures. However, such movement deviates from the ideal pathway after a certain time of operation which affects airflow in a closed area. It is also hard for the technician to make the initial installation and maintenance of the diffuser later on which actually necessitate highly skilled technicians and a considerable experience.

The present invention minimizes the foregoing burden and provides easy installation as well as long standing consistency/accuracy of operation. A servo motor is specifically known as a rotary actuator or motor that allows for a precise control in terms of angular position, acceleration and velocity capabilities that a regular motor does not have. Taking this advantage, an ordinary technician may readily be programming a servo motor (3) according to the present invention upon installation depending on specific needs of the customer as well as the pressure in a common discharge/ventilation line of the building. The position indication means (51) on the fixation disc (5) assist the technician for accurate programming and setting of the servo motor (3) although the differentiating pressure sensor (3) mostly eliminates this obligation.

Therefore, in another aspect, the present invention provides a device for setting a diffuser (100) according to the present invention comprising:
- means for connecting the device to the servo motor (3),
- a memory device for keeping calibration data including pressure, airflow and corresponding data for the positioning of the damper (2),
- a processor for comparing the pressure measured in a common discharge line of a building with the calibration data and programming the servo motor (3) with corresponding data relating to positioning of the servo motor (3) and thereby positioning of the damper (2) in a predetermined position providing the desired airflow.

With the foregoing device, the technician shall be able to set the operation positions of the servo motor (3) at various levels of airflow. The position indication means (51) of the fixation disc (5) shall nevertheless provide an additional guidance for the technician for correct positioning of the damper (2) depending on the desired levels of ground ventilation and/or forced ventilation.

In another aspect, the present invention provides a method for installing a diffuser (100) according to the present invention comprising the steps of:
- mounting the diffuser (100) to a media to be ventilated,
- exposing first inlet (71) of the diffuser (100) to the discharge line of the central ventilation system,
- measuring pressure of the media to be ventilated via second inlet (72),
- measuring pressure of the discharge line via first inlet (71),
- producing a control signal based on a difference of the pressures of the ventilated media and the discharge line,
- operating the servo motor (3) according to said difference for the arrangement of the aperture (11) corresponding to a predetermined pressure difference value.

In certain embodiments, the foregoing method further comprises a manually conducted method comprising:
- measuring the pressure in said common discharge/ventilation line,
- comparing said pressure value with predetermined data and setting angular position of the servo motor (3),
- checking position of the damper (2) based on position indication means (51) provided on the fixation disc (5).

Once the diffuser (100) is installed correctly with above arrangement, airflow shall be adjusted by the diffuser (100) per se, and occasionally it can also be manually adjusted by any user with a simple switch (not shown) in various modes and levels of ventilation based on pre-set values. The servo motor (3) is noted to be sensitive and accurate under repeated working conditions such that the damper (2) rotates from one position to another consistently. Consistency is improved with the differentiating pressure sensor (7) as mentioned above.

In another aspect, the present invention relates to a novel range hood (not shown) to be connected to a common discharge/ventilation line of a building comprising the diffuser (100) according to the present invention. The diffuser (100) is preferably connected to an exhaust duct of said range hood.

Still in a further aspect, the present invention pertains to a central discharge or ventilation system for removing dirty air from multi-unit residential buildings comprising:
- a common discharge line having inlets in different units of the building,
- a common engine connected to said discharge line for the suction of dirty air from said inlets,
- a diffuser (100) as defined hereinabove connected to at least one of said inlets.

The stationary disc (1) and the damper (2) of the diffuser (100) according to the present invention may conveniently be produced from plastics, metal or a combination of metal and plastics such that one of the them is metal and the other is plastics. More preferably, both components are made of a metal.

Further aspects and embodiments of the present invention will be apparent for those skilled in the art in view of the appended claims.

## Claims

1. A diffuser (100) for ventilation of a multi-unit residential building through a central ventilation system, comprising a stationary disc (1) having a plurality of apertures (11), and a damper (2) rotating with a radial movement over said stationary disc (1) and having a plurality of wings (21) corresponding to said apertures (11) in order to open and close them, **characterized in that** the diffuser (100) further comprises:
- a servo motor (3) connected to said damper (2), which provides radial movement of the damper (2) between predetermined positions over the stationary disc (1), and
- a differentiating pressure sensor (7) communicating with the servo motor (3), said sensor comprising a first inlet (71) for measuring pressure in a discharge line connected to the central ventilation system and a second inlet (72) for measuring pressure in the media to be ventilated, whereby the differentiating pressure sensor (7) produces a signal based on a difference of the pressure values obtained through the second inlet (72) and first inlet (71),
wherein the servo motor (3) is adapted to move the damper (2), based on the signal produced by the differentiating pressure sensor (7), to predetermined positions for arranging size of the aperture (11) and obtaining the desired level of airflow.

2. A diffuser (100) according to claim 1 wherein the diffuser (100) further comprises a fixation disc (5) mounted over the stationary disc (1) which creates a guidance channel for the radial movement of the damper (2).

3. A diffuser (100) according to claim 2 wherein said fixation disc (5) comprises indication means (51) coinciding with at least one predetermined indication point on the damper (2) in order to show predetermined positions of the damper (2) corresponding to predetermined levels of airflow,

4. A diffuser (100) according to claim 3 wherein the indication means (51) are located at different positions along circumferential area of the fixation disc (5) which positions are determined based on the pressure in a common discharge line of the central ventilation system.

5. A diffuser (100) according to claim 4 wherein said positions are arranged for ground ventilation and forced ventilation based on the pressure value in a common discharge line of the central ventilation system.

6. A diffuser (100) according to claim 3 wherein said indication means (51) is provided in the form of written indications, grooves or a combination thereof.

7. A diffuser (100) according to claim 1 wherein the damper (2) comprises two opposing wings (21) on two sides of a center hole (20) and said stationary disc (1) comprises apertures (11) corresponding to the wings (2) on two sides of its center hole (10).

8. A diffuser (100) according to claim 1 wherein differentiating pressure sensor (7) is adapted to carry out pressure measurements and producing corresponding signals on regular basis.

9. A diffuser (100) according to claim 1 wherein differentiating pressure sensor (7) is connected to the stationary disc (1) via an air duct.

10. A device for making an initial setting and installation of the diffuser (100) according to any of the preceding claims comprising:
- means for connecting the device to the servo motor (3) of the diffuser (100),
- a memory device for keeping calibration data including pressure, airflow and corresponding data for the positioning of the damper (2),
- a processor for comparing the pressure measured in a common discharge line of a building with the calibration data, and programming the servo motor (3) with corresponding data relating to positioning of the servo motor (3), and thereby positioning of the damper (2) in a predetermined position providing the desired airflow.

11. A method for installing the diffuser (100) according to according to any of the claims 1 to 9 comprising the steps of:
- mounting the diffuser (100) to a media to be ventilated,
- exposing the first inlet (71) of the diffuser (100) to the discharge line of the central ventilation system,
- measuring pressure of media to be ventilated via second inlet (72),
- measuring pressure of the discharge line via first inlet (71),
- producing a control signal based on a difference of the pressures of the ventilated media and the discharge line,
- operating the servo motor (3) according to said difference for the arrangement of the aperture (11) corresponding to a predetermined pressure difference value.

12. A method according to claim 11 further comprising the steps of:
- measuring the pressure in said common discharge/ventilation line,
- comparing said pressure value with predetermined data, and setting angular position of the servo motor (3),
- checking position of the damper (2) based on position indication means (51) provided on the fixation disc (5).

13. A central ventilation system for removing dirty air from a multi-unit residential building comprising:
- a common discharge line having inlets in different units of the building,
- a common engine connected to said discharge line for the suction of dirty air from said inlets,
- a diffuser (100) according to any of the preceding claims 1 to 9 connected to at least one of said inlets.

14. Use of a diffuser (100) according to any of the preceding claims 1-9 in a central ventilation system of a multi-unit residential building or a range hood connected to said system.

15. A range hood comprising the diffuser (100) according to any of the preceding claims 1 to 9.
